# EUROPEAN PATENT APPLICATION

(11) **EP 4 098 865 A1**
(43) Date of publication of application: **07.12.2022**
(21) Application number: 22177370.8
(22) Date of filing: 06.06.2022
(51) Int. Cl.: F03B 17/00, F03B 1/00

(54) **A SELF-POWERED ELECTRIC GENERATOR THAT WORKS BY CIRCULATING WATER IN A CLOSED CIRCUIT**

(30) Priority: 06.06.2021 KW 20421; 22.02.2022 LB 1245022
(71) Applicant: Salib, Magdy Maher Eskander, 035901 Shaab Al bahary (KW); Alfulaij, Waleed khalifah Ati, 047742 Hiteen (KW)
(72) Inventor: Salib, Magdy Maher Eskander, 035901 Shaab Al bahary (KW)
(74) Representative: Lapienis, Juozas

(57) **Abstract**

The amount of electricity for industrial and civil use is generated from large alternating current generators that are powered by conversion machines (hydraulics, steam turbines, etc...) to give up this conversion process, we can use some sources that do not need any conversion operation from any source of energy such as light, steam, water, etc. into electrical energy, these sources are known as internal energy generation sources. An external power source such as a battery is used to initially supply power to start the alternator and generator. Once the system is started, the battery does not have to supply power to the system.

The battery can then be disconnected and the alternator and electric motor will work together to generate electrical power. The alternator supplies one part of this electrical power to the water transformer and another part to the specified load devices. The power output of the water transformer is used to drive the electric motor as feedback. This self-powered generator uses internal energy and will produce more external energy than internal without relying on an external power source.

For the success of this process, a power source must be built that generates energy with a performance factor greater than one.

## Description

This invention reveals a device for generating self-operating electric power by pushing and circulating water in a closed circuit. The device according to the current invention is equipped with electronic control circuits and pressure sensors. The device according to the current invention is equipped with starter batteries that are recharged when the device is started. The device does not need any fossil fuels and an industrial computer that contains a program designed by the inventor to control the device

### Invention Background:

As known, there are several ways to generate electricity:
- Generation of Electricity by waterfalls and dams (described in Patent No. US4241283A and CN104653389A) and others.
- Generation of Electricity by wind (described in Patent No. US5384489A and Patent No. WO2011059760A2).
- Generation of Electricity by Solar Cells (Described in Patent No. US6550248B1).
- Generation of electricity by generators powered by fossil fuels (described in Patent No. US2525131A).
- Generation of electricity by steam-powered generators (described in Patent No. US5426332A).

Each method has advantages and disadvantages. One of the disadvantages of the first method is that it is necessary to have natural waterfalls such as waterfalls or to build dams on waterways, and therefore this method cannot be used anywhere.

One of the disadvantages of the second method (Generation of Electricity by wind) is that winds must be available at speeds sufficient to move the fans installed on generators to generate electric power. Therefore, this method cannot be used in areas that do not have sufficient winds throughout the year.

One of the disadvantages of generating electricity through the use of solar cells is the need for large areas of land to generate energy to an acceptable extent, as the amount of energy generated from one cell is only 200 watts, as well as the weakness of the generated energy or the interruption of energy generated in times of clouds.

One of the disadvantages of using generators that depend on fossil fuels is the noise and pollution resulting from burning fuel, as well as the high cost of operation and maintenance.

One of the disadvantages of steam-powered generators is that they mainly depend on burning fossil fuels to produce steam.

One of the disadvantages of using the movement of waves and tides is that it is not possible to use them in all areas where there must be seas containing active wave movement.

### Self-Powered Generators

### An introduction to the different types of self-powered generators

### 1- Flywheel Electric Generator

A flywheel electric generator consists of a star motor, a flywheel rotating shaft rotated by the motor, a flywheel rotating by coupling to a rotating shaft, and a set of permanent magnets positioned in largely equal spaces from center angles on the outer circumferential sections of the flywheel, a pair of Electromagnets are fixedly arranged in positions on the flywheel diameter line to counteract the permanent magnet and electronic generator which is rotated by the rotating shaft (described in Patent No. EP1793480A3).

But this method has its disadvantages:
- The force on the flywheel increases with speed and the energy the wheel can store is limited by the strength of the material it is made of: Spin the flywheel too quickly and you will eventually reach a point where the force is so great that it shatters the wheel into shrapnel. It can literally explode.
- This method can be used to generate small capacities, but to generate large capacities you will need a very large and very heavy flywheel that will require a very large power to start

### 2- Electricity generator based on magnetic motor

This generator relies on the use of the magnetic motor to move the generation head. The magnetic motor is a type of permanent motion machine, which aims to generate rotation through permanent magnets installed in the stator and rotor without an external power source, and the movement is carried out by forces of attraction & repulsion.

Practically, this method cannot be used due to the difficulty of controlling the magnetic motor, as well as the high cost of its production.

### The Device According to the Present Invention

### Introduction.

Electrical energy occurs naturally, but rarely appears in usable forms. For example, although the energy generated by lightning dissipates which exceeds global electricity demand by a large factor, lightning has not been used in practice due to its unpredictability and other problems. In general, practical electrical power generation systems convert the mechanical energy of the moving parts into electrical energy and there are systems that work without relying on this mechanical step, but at the moment they are either excessively efficient or expensive due to the reliance on complex technology. While some electrical plants derive mechanical power from moving water (hydroelectricity), the vast majority derive power from heat engines whose working substance is steam. In electricity, a machine is used to convert mechanical energy into electrical energy. It works on the principle of electromagnetic induction. When a conductor passes through a magnetic field, a voltage is induced across both ends of the conductor. An alternator is simply a mechanical arrangement to move a conductor and lead the current generated by the voltage to an external circuit, where it powers electrically powered devices.

In the simplest form of an alternator, the conductor is an open coil of wire rotating between the poles of a permanent magnet during one turn, one side of the coil passes through the magnetic field first in one direction and then in the other, so that the induced current is an alternating current, moving first in one direction, then in the other. Each end of the coil is connected to a separate metal slip ring that rotates with the coil. The brushes on the slip rings are connected to the outer circuit. Thus current flows from the windings to the slip rings, and then through the brushes to the external circuit. In order to obtain direct current, i.e. current that flows in only one direction, a commutator is used instead of slip rings.

The commutator is a single slip ring divided into left and right halves that are insulated from each other and connected to opposite ends of the coils. Current is allowed to leave the generator through the brushes in one direction only. This current pulsates and goes from no flow to maximum flux and back again to no flow. A practical DC alternator, with many windings and many circuit breakers in the commutator, gives a more stable current. There are also many magnets in the generator.

In any generator, the complete assembly bearing the windings is called the motor, or rotor, while the fixed parts make up the stator. Except in the case of magnets, which use permanent magnets, alternating current and direct current generators use electromagnets. The field current of an electromagnet is often direct current from an external source. The term dynamo is often used for a direct current generator; the alternator in the auto business is usually a dynamo. An alternating current generator is called a generator. To alleviate various construction problems, generators have fixed iron and rotating electromagnets. Most generators produce polyphase alternating current, a complex type of current that provides a smoother flow of power than simple alternating current. By far the largest amount of electricity for industrial and civil use comes from large alternating current generators powered by steam turbines.

While on the other hand, some sources can be created that do not need any conversion from any source of energy, such as light, steam, water, etc. into electrical energy, and these sources are known as internal energy generation sources. In these energy sources, the internal energy will be in the form of mechanical energy (rotation and spindle rotation). Also, there will be consideration of the law of conservation of energy in this energy source. These sources are capable of producing more energy than is required to operate them. Excess power is used to power the devices. In free energy devices, only a minute input will be fed and after some time it is disconnected, the source will start to generate free energy which will be a very useful and free resource for us.

This system sounds too good to be true, and seems impossible at first sight, even considering that normal vehicle alternators have a coefficient of performance higher than one (i.e., the power produced is greater than the power the user needs to operate the device). It is not far from a proven system that has a reputation for being vehemently opposed to recognizing the existence of anything like a "perpetual motion machine", of which this system appears to be.

The device according to the present invention provides a power source capable of producing more power than is required to operate the device. Excess energy is used to power various devices and loads. The feedback loop approach is used to direct a portion of the power produced by the generator to the generator power input port. The feedback loop approach enables this generator to use its generating power for work. The additional power generated by the generator is used to power other devices that can be connected to the generator.

### Brief explanation of the figures:

- Figure (1) schematic diagram of the device Figure (1) schematic diagram of the device
- Figure (2) schematic diagram of the turbines
- Figure (3) schematic diagram of the movement of the water cycle
- Figure (4) Schematic diagram of electrical circuits
- Figure (5) is a figure of the main screen of the control program

### How the invention works:

The device, according to the present invention, as shown in Figure No. (1), consists of main parts interconnected with each other, which are
- Batteries
- Water circuit
- Generation heads
- 48V DC High Torque Motor High Pressure Water Pump
- Turbine set (Pelton Wheel)
- Electrical circuits
- Control computer and main console

### How to apply the invention

It is clear from Figure No. (1) that the water circuit consists of a water tank whose capacity varies according to the capacity of the device and a set of delivery paths so that the water returns again to the tank and the water is withdrawn from the tank by means of a high pressure pump installed in the water path where water is drawn and pumped into the turbines which moves and rotates under water pressure and moves the generation heads with sufficient speeds and torque to generate electric power. A number of pressure sensors are installed inside the water paths to measure water pressure and send readings to the main control unit, as well as a number of electric current sensors are installed on the power lines resulting from the generation heads to measure the intensity of the current and send readings to the main control unit.

The main computer of the device and the software installed on it analyze the sensor readings and issue commands to the main control unit and then to the electronically controlled relays (CS1... CS3).

### Operation stages

- When starting, the batteries supply the water pump, the computer and the control unit with the necessary power to start.
- The water pump pumps water into the turbines installed on the generation heads.
- The generator heads (Alternator 1) and (Alternator 2) rotate to generate electrical power.
- The sensors send the various readings to the main control unit, which in turn sends the readings to the computer for analysis.
- When the readings from the generator head (Alternator 1) reach the required limit, the computer gives commands to each of the different relays (CS1...CS3) via the control unit in order to convert the necessary energy to feed each of the pump, the computer and the control unit from the battery to the energy issued by 48 volts supply Power (48V DC power supply), which in turn also recharges the batteries.
- The energy from the generator head (Alternator 2) is used in various fields of use

### Graphics and Pictograms

**Graphics Index**

| **No.** | **Statement** |
|---|---|
| 1 | Water tank |
| 2 | Electrical outlets for different loads |
| 3 | Electric current sensors |
| 4 | AC electric current 220 volts |
| 5 | Power supply 48 volts DC |
| 6 | Relay 1 |
| 7 | Relay 2 |
| 8 | Relay 3 |
| 9 | Batteries 48V DC |
| 10 | DC to 220V AC power converter |
| 11 | Generator No. 1 |
| 12 | Generator No. 2 |
| 13 | Industrial computers |
| 14 | USB connections |
| 15 | Main console |
| 16 | 48 volt high pressure water pump |
| 17 | Pressure sensor 1 |
| 18 | Pressure sensor 2 |
| 19 | Pressure sensor 3 |
| 20 | Turbine number 2 |
| 21 | Turbine number 1 |
| 22 | Paths for the movement of water |

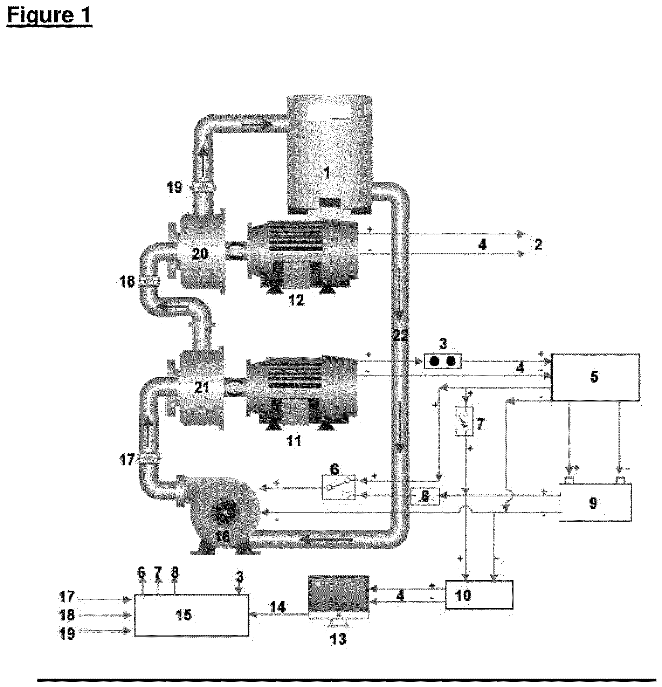

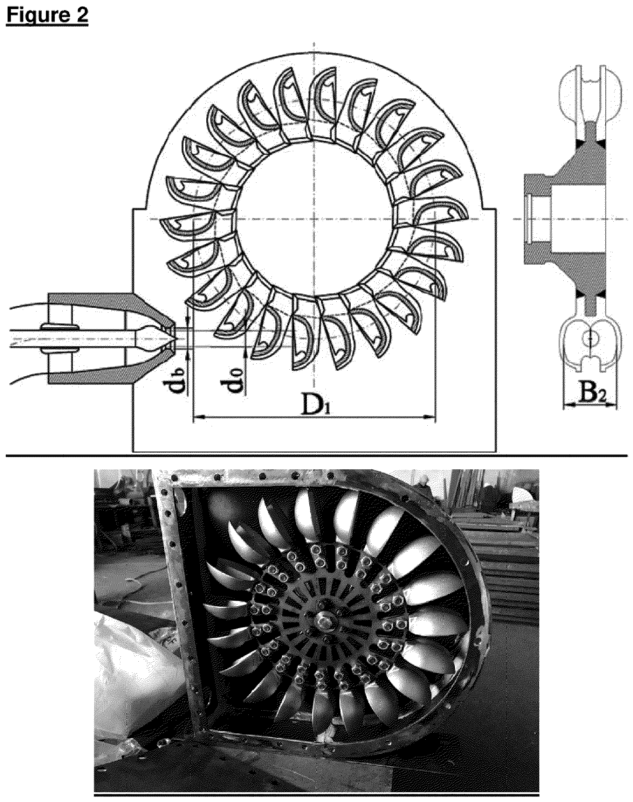

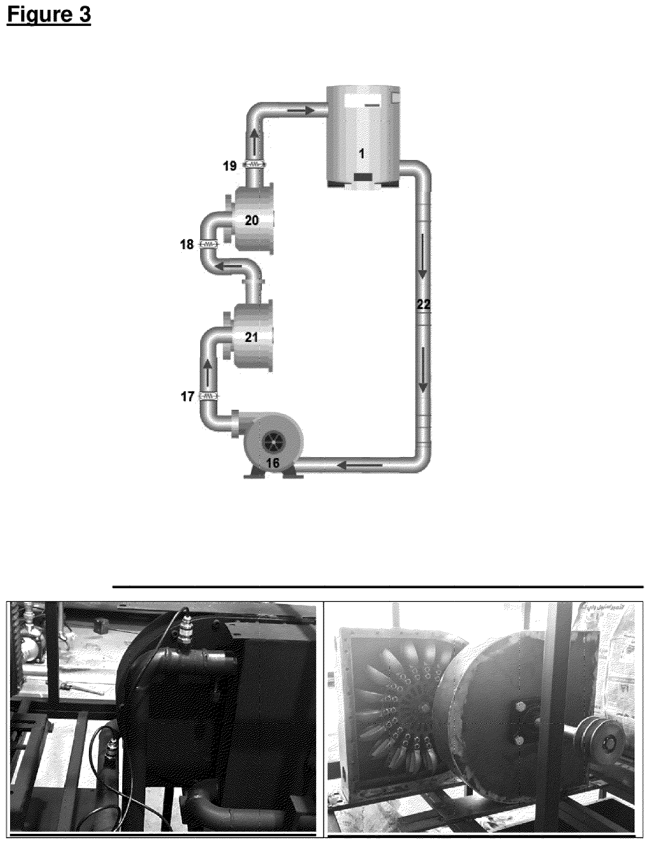

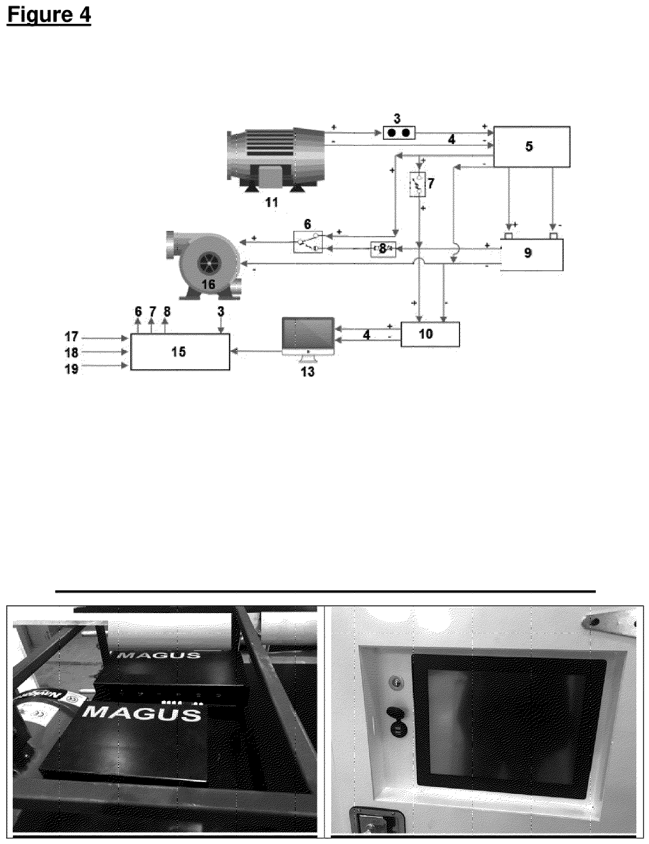

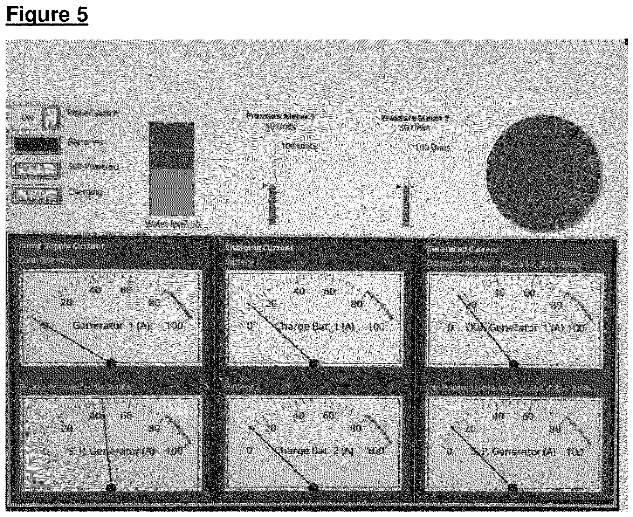

## Claims

1. A method of generating electric power by pushing and circulating water in a closed water circuit, where water is withdrawn from a water tank by a high-pressure pump and pushed back into closed paths, the paths containing turbines (Pelton Wheel) that rotate with high torque under the force of water pressure in the paths, and the turbines are mounted on rollers,
wherein, after the water pushes and moves the turbines, the water returns to the tank through the water paths, and the rotational movement of the turbines is transmitted to generation heads through rubber belts.

2. A self-operating electric power generation device that operates according to the method of water circulation in a closed path according to claim 1 includes a metal structure divided into three parts, a lower part of which contains a water tank next to which a high-pressure water pump is installed and connected to the water tank, and the pump is moved by a motor a high-torque 48 volt DC electric current installed next to the pump, connected to it by a metal chain, the lower part contains four 12 volt 80 amp batteries, which are connected in series to feed the pump motor when starting, a central part of the chassis contains water turbines on which rollers are installed, and they rotate by the force of the pump pumping water inside, and the impellers are connected to the pump by closed water paths ,the central part of the chassis also contains electric power generation heads on which rollers are installed, and there are rubber belts that transfer the movement from the turbines to the generation heads ,an upper part of the chassis contains to convert 220 volts alternating current from one of the generation heads to 48 volts DC, which is used to operate the pump motor when the batteries are automatically separated, as well as to charge the batteries,
the upper part also contains a power transformer from 12 volts DC to 220 volts 350 Watt alternating current to feed the control computer and control circuits at startup.

3. The device for generating self-operating electric power by pushing and circulating water in a closed circuit according to claim 2, the device including a number of electric current sensors kept inside a metal box and installed in the upper part of the chassis.

4. The device for generating self-operating electric power by pushing and circulating water in a closed circuit according to claim 2, the device including a number of automatic control circuits kept inside a metal box and installed in the upper part of the metal structure.

5. The device for generating self-operating electric power by pushing and circulating water in a closed circuit according to claim 2, the device including a number of automatic relays kept inside a metal box and installed in the upper part of the metal structure.

6. The device for generating self-operating electric power by pushing and circulating water in a closed circuit according to claim 2, the device being encapsulated from the outside with a metal body.

7. The device for generating self-operating electric power by pushing and circulating water in a closed circuit according to claim 2, the device including a number of pressure sensors installed inside the water paths in the central part of the metal structure.

8. The device for generating self-operating electric power by pushing and circulating water in a closed circuit according to claim 2, the device including 6 metal doors installed on the metal body.

9. The device for generating self-operating electric power by pushing and circulating water in a closed circuit according to claim 2, the device including an industrial-type computer with a 17-inch touch screen installed in one of the metal doors of the device and can be installed in any other door as needed.

10. The device for generating self-operating electric power by pushing and circulating water in a closed circuit according to claim 2, the device including 2 USB outlets installed next to the computer.

11. The device for generating self-operating electric power by pushing and circulating water in a closed circuit according to claim 2, the device including an operating mantle switch installed on the side of the computer.

12. The device for generating self-operating electric power by pushing and circulating water in a closed circuit according to claim 2, the device including 4 outputs for the generated energy installed in one of the metal doors of the device.

13. The device for generating self-operating electric power by pushing and circulating water in a closed circuit according to claim 2, the device including a computer program (software) to receive and analyze readings from different sensors, as well as control the device and issue commands to automatic relays and control circuits, the program being installed on your computer.

14. The device for generating self-operating electric power by pushing and circulating water in a closed circuit according to claim 2, the device including a Wi-Fi antenna for easy connection of the device to the Internet and remote control.
